# EUROPEAN PATENT SPECIFICATION

(11) **EP 3 654 474 B1**
(45) Date of publication and mention of the grant of the patent: **05.01.2022**
(21) Application number: 19208892.0
(22) Date of filing: 13.11.2019
(51) Int. Cl.: H02G 3/12, H02G 3/14

(54) **ELECTRICAL INSTALLATION BOX ASSEMBLY**
ELEKTROINSTALLATIONSKASTENANORDNUNG
ENSEMBLE FORMANT BOÎTIER D'INSTALLATION ÉLECTRIQUE

(30) Priority: 16.11.2018 IN 201841043173
(43) Date of publication of application: 20.05.2020
(73) Proprietor: Schneider Electric Industries SAS, 92500 Rueil-Malmaison (FR)
(72) Inventor: NAYAK, Gireesh, Bangalore-560067, Karnataka (IN); CHIKKANNA, Manohar, 560073 Bangalore (IN); KULLOLLI, Dharmveer, 560040 Bangalore (IN); VANAMANE, Vivek, 416415 Maharashtra (IN)
(74) Representative: Swea IP Law AB

(56) References cited:
- EP-A1- 2 466 707
- EP-A1- 2 597 743
- CN-U- 206 742 795
- GB-A- 2 402 818
- US-A1- 2007 187 127

## Description

### Field of invention

The invention relates to an electric installation box assembly for installation of electrical wiring devices. The invention is particularly useful for easy rotation, pulling and pushing of screw ring of electrical installation box, allowing the installer to adjust it to different levels of the wall.

### Background of the invention

Electrical wiring devices are mounted on a wall. To mount the wiring devices on the wall, electrical installation box assemblies are used in current installation systems. These electrical installation boxes are installed inside of hollow wall and for most of the time mounted on wooden or metal beams, which are used to create structures of the wall. Alternatively, these electrical installation boxes can be used inside a brick wall, concrete wall, and stone wall and many.

While installation of the wiring devices installer needs to adjust the screw ring due to wall irregularity, regulations by wall papers, plaster board and interior tiles thicknesses which have an impact on the wiring device installation. So flexibility is needed to adjust the product to all variations of installations and in the case of multiple layers of plaster boards screw ring has to bring ring out to match front level of wall or else installer finds it difficult to mount the wiring devices.

At present, to achieve this variation an adjusting ring mechanism is used but it is very difficult to remove from assembly when box is mounted on concrete wall, or while painting. Due to lack of available space in the box, installer is not able to grip the ring easily and it is not a simple process to unscrew and fix rotary element which is attached to the drilling machine.

While installing the electrical box assemblies there are many installation problems in a system such as concrete leakage, ring struck due to concrete, and difficulty to remove or rotate the ring by paint deposition. But, in the present scenario there is no solution for power tool operating systems for the adjustments mentioned, and to draw any power when lid is closed.

Current lids in electrical installation boxes are made of Polypropylene which is dark in colour due to its dense molecular structure and thereby it is difficult to identify the position of the screws in ring.

The problems associated with conventional electrical installation boxes are that the adjustable rings, if present, of these boxes cannot be rotated by hand or power tool because existing system does not have any hold and rotating features in lid since there exists no supporting ribs to rotate, there is no power tool compatibility with said screws ring and no feature on the lid like: telescopic activation and deactivation of screw ring, also ring pull and push is very difficult with the existing system. There exists no mechanism to identify the screw location of the screws in screw ring assembly which should be horizontal and vertical, no concrete tightness provided by the lid, no blank plug compatibility with box docking option, and lid knocking option for lid which gives screw protection while painting and providing power for other construction activities. These are some of the reasons why the lids, if present, are not working out.

With a view therefore to overcome the technical problems associated with conventional electrical boxes, the inventors felt the need to develop a novel electrical installation box assembly. The present invention proposes to provide a solution to the existing difficulties in said field of invention by providing a lid assembly to said electrical installation box assembly to mount and demount the product easily with multi-functionality.

### Summary of the invention

Accordingly, the present invention provides a novel electrical installation box assembly for installation of electrical wiring devices wherein a lid is first assembled with a screw ring and thereupon assembled to the electrical installation box. Alternatively, the screw ring is assembled to the electrical installation box assembly and lid is assembled on it later or vice versa.

EP2466707 discloses a box having a base including a fixation unit i.e. elongated oblong opening, formed on a floor wall, and a sleeve defining an inner housing, where the base is in the form of a square or flat plate. The sleeve is formed from a single piece. A ring is provided with a screwing unit i.e. thread, that is screwed on the sleeve. The sleeve and the ring have a front stop face opposite to a rear stop face at an exterior of the inner housing. An access board is sandwiched between the stop faces.

CN206742795 discloses an expanded adjustable mounting box, has a pre -buried box body in the cement wall body, the front end of box body be provided with in the front the retainer plate of upwards adjusting at the rear, the inner wall front end of box body is equipped with the internal thread, the outer wall of retainer plate on be equipped with the external screw thread.

GB2402818 discloses a junction box includes a box having a base portion and side walls and a lid portion closing off the top of the box. The lid portion may include an easily removable central portion to improve access to the interior of the junction box. US2007/187127 discloses a temporary protective cover for an electrical box having an open front end includes a plate sized and shaped to be removably mounted onto the open front end of the electrical box and a pair of wings formed onto the plate for securing the cover onto the electrical box.

The invented electrical installation box assembly is defined in claim 1 and comprises:
- an electrical installation box, provided with a beam fixing element for mounting inside a wall;
- a screw ring; and
- a lid, to be assembled with said screw ring and thereafter mounted within said electrical installation box;
wherein,
- said electrical installation box is provided with at least one threaded area at its insert entry portion;
- said screw ring is provided with at least one threaded area at its outer periphery to removably engage with said threaded area of said electrical installation box;
- said lid is provided with torsional support ribs to removably engage with locking projections provided in said screw ring and thereby suitably adjust the position of said screw ring in said electrical installation box;
- said screw ring and said electrical installation box are provided with threaded and non-threaded areas;
- the threaded areas of the screw ring alternate with the non-threaded areas of the screw ring along said outer periphery and the threaded areas of the electrical installation box alternate with the non-threaded areas of the electrical installation box around said insert entry portion such that when the ring lid assembly is rotated, the threaded area of the screw ring can travel to the non-threaded area of the electrical installation box whereby a telescopic activation condition is attained ;
- said lid is made out of transparent material for identifying said telescopic activation condition and a deactivation condition.

One object of the present invention is to provide an easy rotary and telescopic mechanism to adjust the ring assembly with the lid as well as the height of the said ring assembly is adjusted for installing electrical wiring devices.

According to the invention, when said screw ring is fixed robust with said electrical installation box, said threaded area of said electrical installation box and threaded area of said screw ring are engaged with each other and thereupon said electrical installation box attains a telescopic deactivation condition.

According to the invention, when said screw ring is adjusted to disengage said threaded area of said electrical installation box and threaded area of said screw ring from each other and thereupon said electrical installation box attains a telescopic activation condition. When said lid-ring assembly is at telescopic activation condition, wherein said threaded areas of said electrical installation box and said screw ring are disengaged with each other, said lid and ring assembly helps to adjust the position of the ring and at this condition lid will not disassemble from the screw ring.

According to one of the aspects of the invention, lid in the invented electrical installation box assembly is provided with a screw head slot feature for rotation by the power tools and also by screw driver.

Additionally said lid is provided with a hand gripping projection to operate said lid by hand and adjust the level of said screw ring in said electrical installation box by providing additional grip to the lid.

In the present invention lid is made out of transparent materials to identify the location of the screws on the screw ring, which should be horizontal or vertical to mount the electrical wiring devices. Transparency is achieved by adding master batch which avoids dense molecular structure in the Polypropylene material.

A further feature of the lid is to protect electrical wiring cables and screw head or threaded ring area inside the electrical installation box from concrete water, Plaster of Paris paste, paint, dust and other solid particles by providing concrete tightness at insert entry area with U-shaped feature. In addition, lid is provided with lid knock out feature wherein a V-shaped cut is provided to cut a portion of said lid to draw power from said electrical installation box without any crack on said lid.

In one preferred embodiment the concrete tightness can be provided by using a casting lid and mounting magnet within the electrical installation box assembly. Said box mounting magnet, fixed inside said lid by means of a rubber layer, wherein said box mounting magnet is detected with a box identification magnet and thereby electrical installation box is identified from outside the wall. Additionally, said box identification magnet provides support to drill cutter, if used by an installer. Advantageously, said lid is provided with a U-shaped structural feature at collar of said lid to hold said box mounting magnet robust and restrict any outer particle inside said electrical installation box.

According to another embodiment of the invention said electrical installation box assembly is provided with a plurality of blank plugs to be installed by means of locking means at cable entry area of said electrical installation box by locking means and thereupon provide protection from foreign particles at said cable entry area.

Advantageously, said blank plug is provided with guiding projections and gripping means for installing said blank plugs in said electrical installation box.

Electrical installation box assemblies can be easily docked together, even after assembling blank plug since this feature is installed in such a way that it will not impact the common guide ways or the guiding feature of the electrical installation box.

Same idea is used in multi gang lids. Lid gives protection to the elements inside the electrical installation box against concrete, Plaster of Paris paste, dust and other solid construction particles.

### Brief description of the drawings

For better understanding, an illustrative embodiment of the invention will now be described with reference to the accompanying drawings. It will however be appreciated that the embodiment exemplified in the drawings are merely illustrative and not limitative to the scope of the invention, because it is quite possible, indeed often desirable, to introduce a number of variations in the embodiment that have been shown in the drawings. In the accompanying drawings:
Figures 1(A) and 1(B) show the installation of an electrical installation box assembly with front and backside view respectively.
Figures 2(A) and 2(B) depict the perspective view of the robust beam fixing element along with the electrical installation box assembly with back and front-side view respectively.
Figures 3 and 4 illustrate the threaded ring assembly and its functions, according to one preferred embodiment of the electrical installation box assembly along with lid and stub assembly.
Figure 5 depicts the exploded view of the electrical installation box assembly from one side, according to one preferred embodiment of the invention, showing threaded ring assembly, screw head, hexagonal slot for power tool operational features and manual holding feature.
Figure 6 depicts the exploded view of the electrical installation box assembly from other side, according to one preferred embodiment of the invention, showing ring thread area, torsional support ribs and flat support on circular surface of said lid.
Figure 7(A) depicts the front view of the electrical installation box assembly, according to one preferred embodiment of the invention, showing holding and star head slot for screw or power drive operation features.
Figure 7(B) depicts the side view of one preferred embodiment the invented electrical installation box assembly showing lid lock and star head slot for screw or power drive operation features.
Figure 7(C) depicts the top view of one preferred embodiment the invented electrical installation box assembly showing screw protection and flat support on circular surface features.
Figures 8, 9, 10 and 11 show the perspective view of the telescopic functions of the screw ring in the electrical installation box assembly, according to one preferred embodiment of the invention.
Figure 12 depicts the exploded view of one preferred embodiment the invented electrical installation box assembly, showing the screw ring, ring assembly, lid and multiple lid locking features.

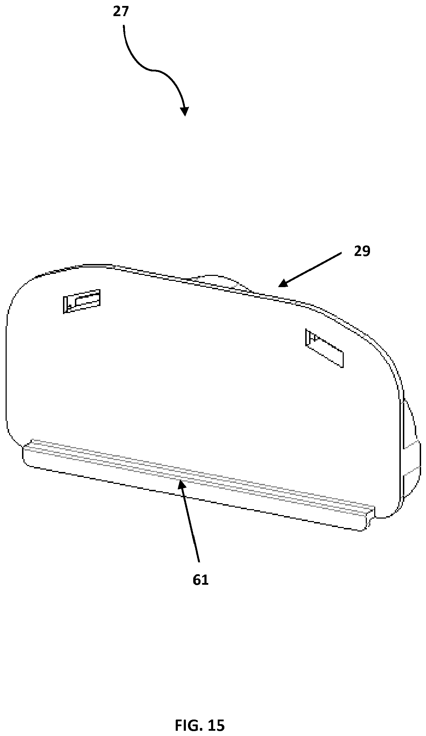

Figures 13, 14, 15 and 16 illustrate the blank plug and its functions in the electrical installation box assembly, according to one preferred embodiment of the invention.

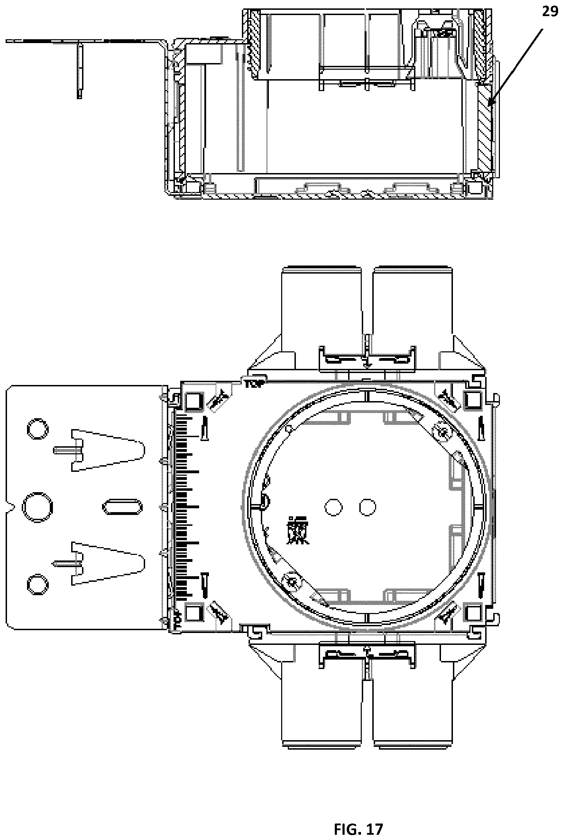

Figure 17 depicts the blank plug assembled with the electrical installation box assembly, according to one preferred embodiment of the invention.
Figures 18 and 19 illustrate the docking of said electrical installation box assembly after assembling the blank plug, according to one preferred embodiment of the invention.

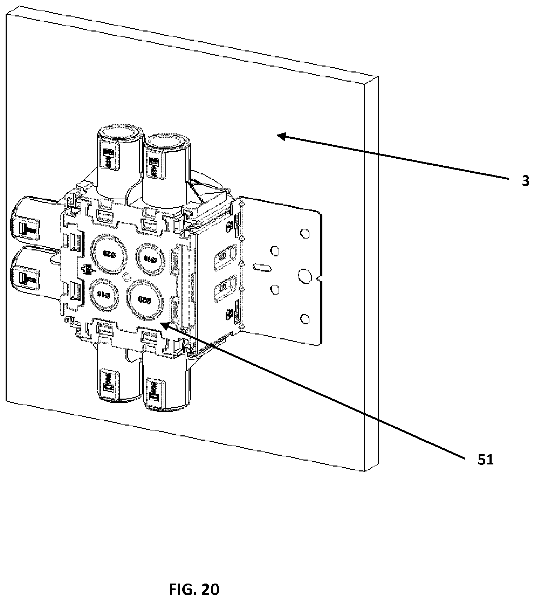

Figure 20 depicts the perspective view of one preferred embodiment of invented electrical installation box assembly mounted on wall with box mounting magnet and lid.
Figures 21 and 22 depict magnetic holding feature of invented electrical box assembly along with box mounting magnet and box identification magnet, according to one preferred embodiment of the invention.
Figure 23 depicts the front view of the electrical installation box showing casting lid and magnet assembly and U-shaped collar, according to one preferred embodiment of the invention.
Figure 24 illustrates the U-shaped feature of the lid of the invented electrical box assembly.
Figure 25 illustrates the lid collar of the lid of the invented electrical box assembly.

### Detailed description of the invention

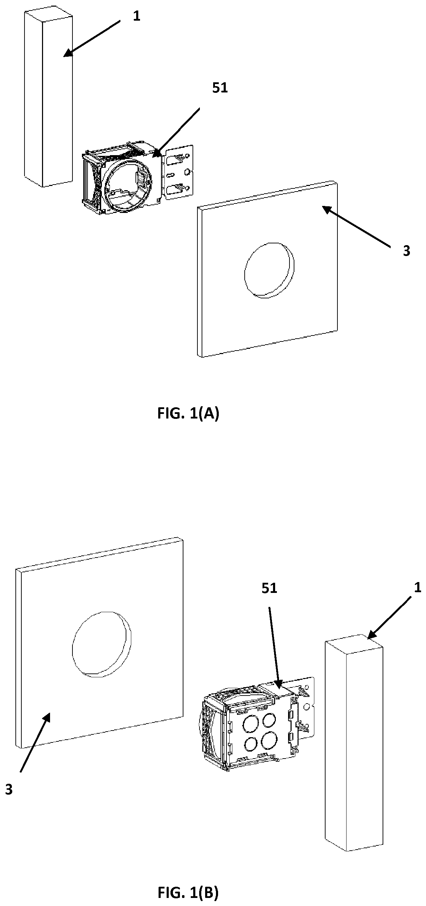

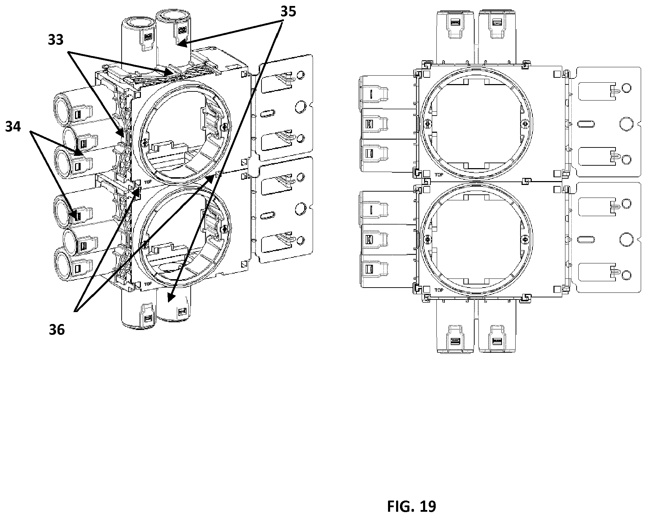

Referring to figures 1(A), 1(B), 2(A), 2(B), 3, 4 and 19 of the accompanying drawings, the electrical installation box assembly (100) comprises of: an electrical installation box (51), a lid (7), a screw ring (17), a common guiding element (32), stub assembly (53), a beam fixing element (52) with self-nail element (5) to mount the box on a beam (1) on a wall (3) providing a provision for screwing, nailing, holding and flexibility in a multiple wall scenarios and wiring devices, said stub assembly (53) having stub lock (33) and stubs (34).

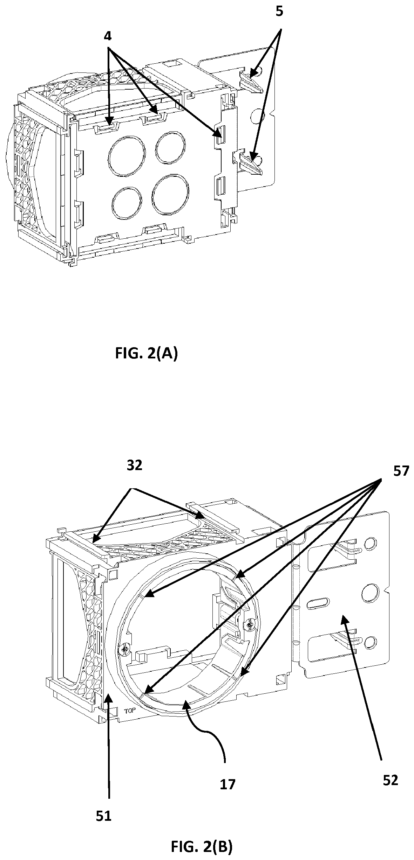

Referring to figures 2(B), 3, 4 and 5 of the accompanying drawings, said lid (7) is assembled together with said screw ring (17), forming a lid-ring assembly (13), and thereafter assembled with an electrical installation box (51). Alternatively, said screw ring (17) is assembled with said electrical installation box (51) and said lid (7) is assembled thereafter.

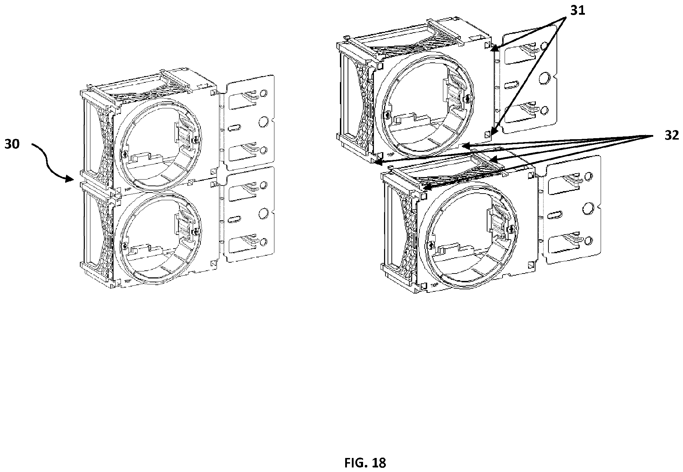

Referring to figures 2(B), 3 and 18 of the accompanying drawings, said common guiding element (32) takes care of all kind of said beam fixing element (52), stub assembly (53), box to box docking (30) and said stub assembly lock (33). Preferably, the electrical installation box assembly (100) is provided with 45° nailing and side nailing provision for installation at various corners.

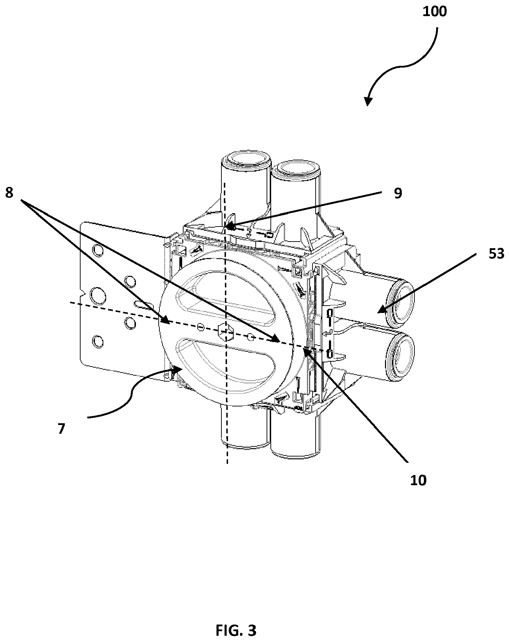

Referring to figure 3 of the accompanying drawings, said stub assembly (53) is completely opened to the standard and non-standard conduits. A clear opening is provided for all kind of flexible and rigid conduits entries in straight or angular scenarios of the electrical cable entry (27) into electrical installation box (51) mounted in a wall.

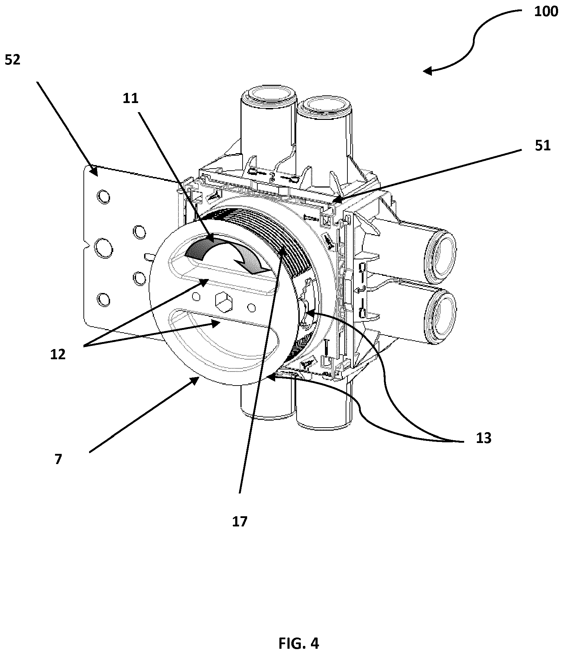

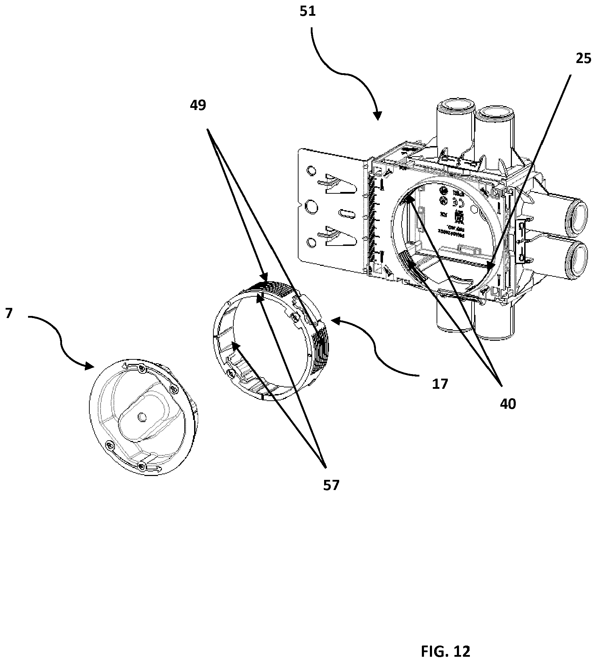

Referring to figures 4, 5, 8, 10 and 12 of the accompanying drawings, said lid (7) and electrical installation box (51) is provided with threaded (49,40) and non-threaded areas. Lid (7) is used to rotate, pull and push said screw ring (17) by telescopic movement of lid-ring assembly (13). Said lid (7) has transparency to identify position of the screws heads (48) which should be horizontal or vertical positions to install electrical wiring devices.

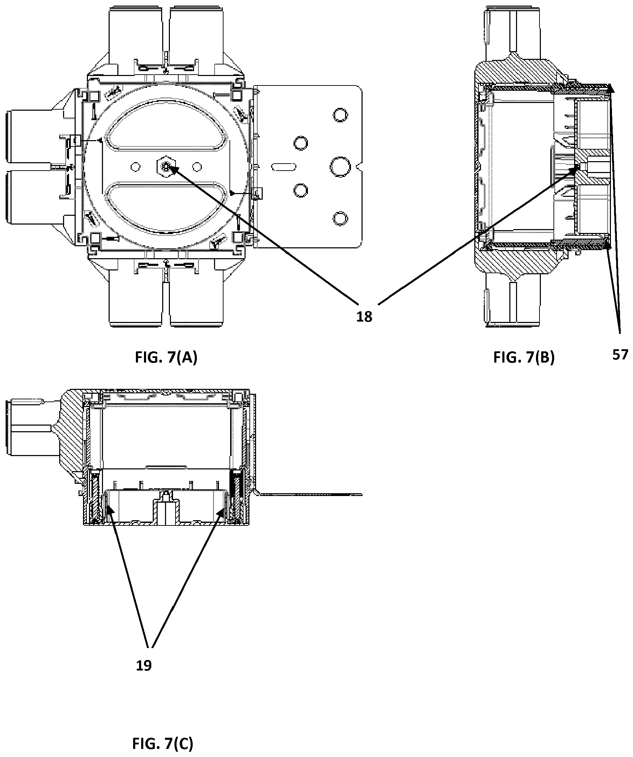

The invented electrical installation box assembly (100) is provided with hand gripping projection (12) provided in lid (7) to hold it manually by hand and rotate said screw ring (17) to adjust said screw ring (17) to bring to different heights to match various levels of walls. Said hand gripping projection (12) can be operated to pull and push in multiple directions along with rotation (11). This also helps to align said electrical installation box assembly (100) in the process of telescopic adjustment of said screw ring (17) as illustrated in figures 4, 7(A) and 7(B) of the accompanying drawings.

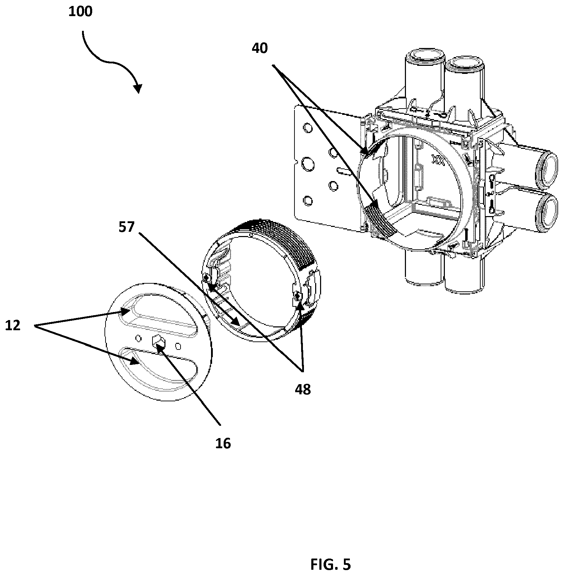

Referring to figures 5, 7(A) and 12 of the accompanying drawings, standard tool and power tool operational feature is provided with hexagonal power tool slot (16). A star head slot (18) for screw or power drive is provided within said hexagonal power tool slot (16) which makes said hexagonal power tool slot (16) multifunctional and helps to rotate the screws by power tools and also by screw driver. Said hexagonal power tool slot (16) is supported by said hand gripping projection (12).

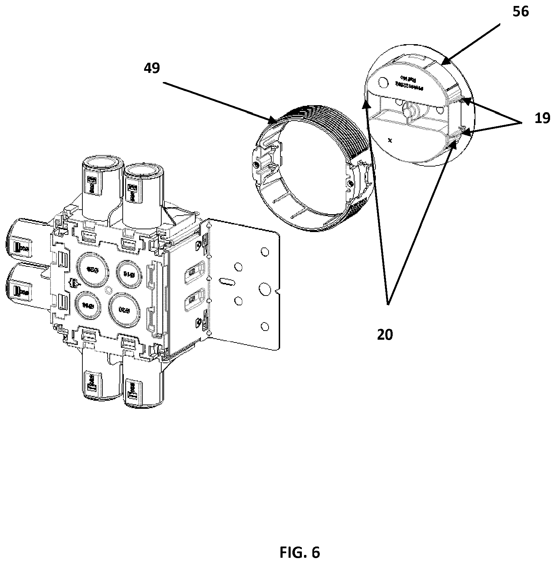

Referring to figures 5 and 6 of the accompanying drawings, invented electrical installation box assembly (100) comprises torsional support ribs (20), which are flat supporting surfaces provided on the circular surface (56) of the lid (7). These support ribs (20) help said lid (7) to removably engage with the locking projections (57) on the inner periphery of the screw ring (17) to rotate said lid-ring assembly (13) by transferring force to said screw ring (17) with frictional forces and supporting projections (19) on said circular surface (56).

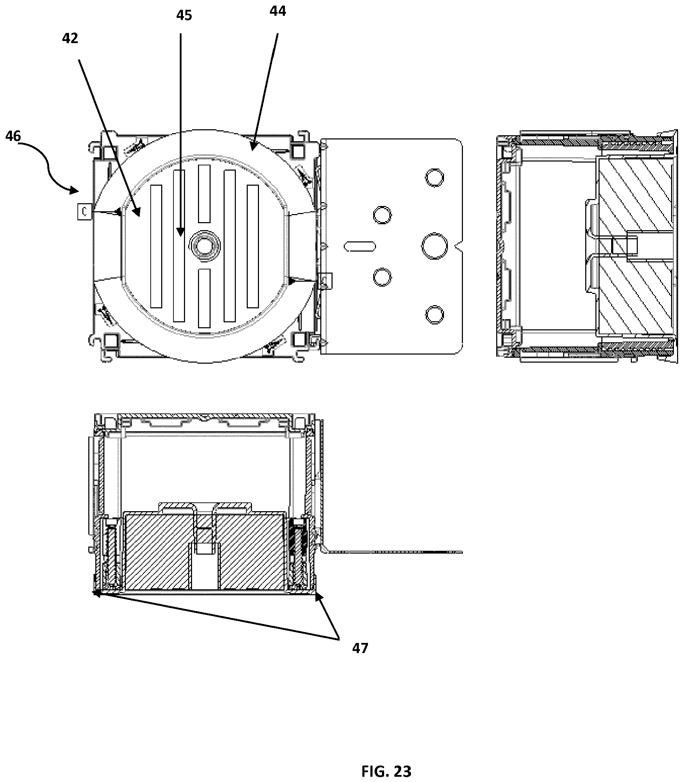

Referring to figures 2(B), 12 and 22 of the accompanying drawings, multiple lid locking projections (57), provided in said screw ring (17), are compatible for different application of lids (7) e.g.: casting lid (44) along with the box mounting magnet (45) assembled together (46) (seen in figure 23), paint protective lids and hollow wall lids or protection covers.

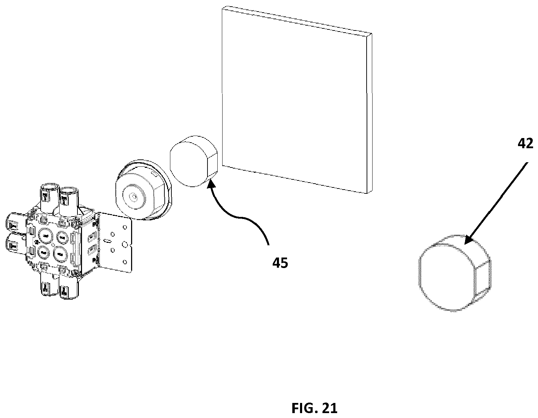

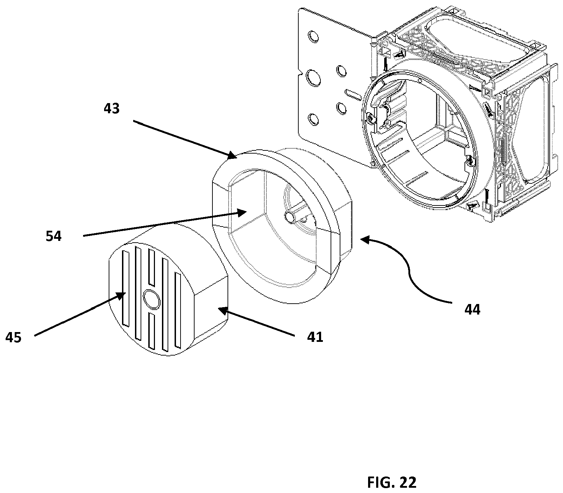

Referring to figures 21 and 22 of the accompanying drawings, the invented electrical box assembly (100) is provided with box mounting magnet (45) for detection of electrical box assembly (100). A rubber layer (41) is provided for holding said box mounting magnet (45). Said rubber layer (41) holds the mounting magnet (45) with tightness and assembled within said casting lid (44). Said rubber layer (41) holds said mounting magnet (45) even when concrete mixture is poured. The electrical installation box (51) can be identified with a box identification magnet (42). The assembly (46) of the casting lid (44) and box mounting magnet (45) is shown in figure 23 of the accompanying drawings.

While installing the electrical installation box assembly (100) inside the wall of concrete layout, it is attached to a metal concrete molding bracket, said wall looks plane from outside. Said box mounting magnet (45) having a rubber layer (41) is installed inside casting lid (44). Said rubber layer (41) is provided for holding said mounting magnet (45) kept inside the electrical installation box (51) of said electrical installation box assembly (100). After installation of said electrical box assembly (100) on concrete or hollow wall installer needs to locate the electrical installation box (51) and cut a hole with drill cutter. For this purpose, said box identification magnet (42) is moved throughout the wall and when it comes within the magnetic field range of mounting magnet (45) assembled with the electrical installation box (51) then attraction force is felt and position of the electrical installation box assembly (100) can be detected.

Additionally, said box identification magnet (42) can be provided with a hole in its center to guide and support drill cutter to cut hole in wall and then screw ring (17) is rotated to bring it to front surface of the wall by using said lid (7).

In any electrical installation box assembly (100), to mount electrical wiring devices, the positions (8) of the screw heads (48) of said screw ring (17) should always be vertical (9) or horizontal (10). When hand gripping projection (12) is horizontal then, said screws positions (8) are also horizontal. If it is vertical then screw positions (8) are vertical. In these positions are referred as telescopic deactivation position (22). If said hand gripping projection (12) is in angular direction other than vertical (9) or horizontal (10), then screws positions (8) are in telescopic activation condition (23). The positions are defined in such a way that when lid-ring assembly (13) is taken out to adjust screw ring's (17) position, then said screw heads (48) are always in any angular position other than vertical (9) or horizontal (10), i.e. in telescopic activation condition (23).

Transparency is provided to the lid (7) to find out the position of the screw heads (48), and thereby identifying the telescopic activation (23) or deactivation (22) condition. Transparency is achieved by adding master batch which avoids dense molecular structure in the Polypropylene material. Multiple lid locking projections (57) make small click upon engaging with the lid (7) and helps to get the optimum position for installation.

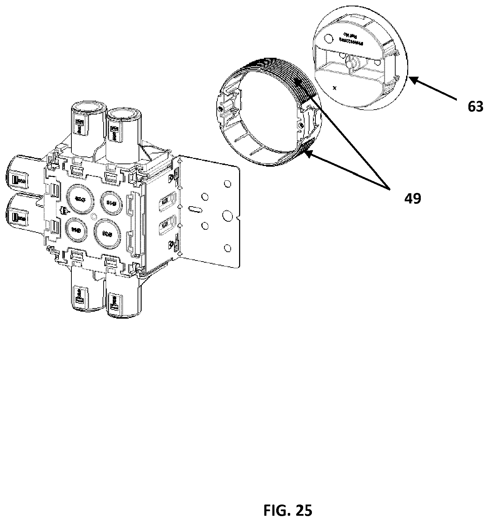

As seen in figure 25, the lid collar (63) is a projected feature on the lid (7), avoiding falling of said lid (7) inside the electrical installation box (51). It is a stopper to said lid (7) moment when said lid (7) is butt on front surface of the electrical installation box (51). Additionally, it also helps to align the screw ring (17) to the front surface of the electrical installation box (51) and stop the movement of the screw ring (17). When said lid (7) is butt on the electrical installation box (51), the screw heads (48) will be in horizontal position (10).

Referring to figure 22 of the accompanying drawings, the concrete tightness feature is provided with casting lid (44) with protruding circular ribs (43) on periphery of it for protection from concrete water, Plaster of Paris paste or any external solid particle inside the electrical installation box assembly (100).

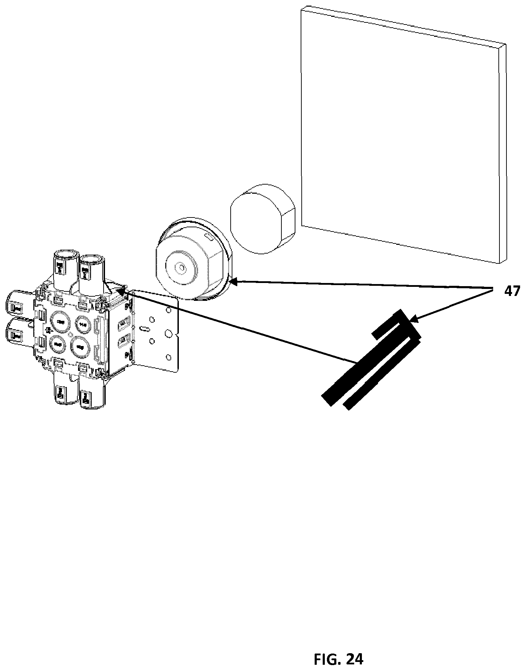

Mounting magnet (45) along with the casting lid (44) is assembled to the electrical installation box (51) and stacked to the casting metal flanks and concrete mixture is poured in to the concrete mold, then vibrator is kept settling the concrete mixture. Generally, in this process concrete water enters through said lid (7), if proper protection is not provided to the lid (7) and concrete will entre inside said electrical installation box assembly (100). U-shaped structural feature (47) at the collar of the lid (7) gives protection from concrete water blocking it from entering the electrical installation box (51) and damaging the components inside, as shown in figures 23 and 24.

In electrical installation box (100), if lid (7) is removed, concrete water, Plaster of Paris paste or paint will entre inside the electrical installation box assembly (100), screw head (48) or thread area (49) of the screw ring (17). Said lid (7) is provided with knock out feature (39) to protect said screw ring (17) from foreign particles. While providing accessibility to draw electric power for construction works after molding in done, this feature (39) provided protection to screw heads (48) or ring thread area (49) without taking off the lid (7). Said lid knock out feature (39) is built in such a way that the section with very thin cross section due to V-shaped cut, provided though out the bottom surface corner of lid (7) can be cut without crack on said lid (7) as illustrated in figures 5, 6 and 7(C) of the accompanying drawings. This lid knock feature (39) is useful while drawing power for any construction activity, without opening the lid (7).

Alternatively, it can also be achieved by live hinge lids, where lid (7) can be opened up by a little lifting force and closed if a small pressure is applied on said lid (7)

Referring to figures 6, 12, 13, 18 and 19 of the accompanying drawings, said electrical installation box (100) is provided with the blank plug (27) which gives complete protection when then knockouts of said electrical installation box assembly (100) is knocked and opened at the cable entry area (26) by mistake or by choice. Lid (7) gives protection at insert entry portion (25) but blank plug (27) will give protection at cable entry area (26). One of the important features of the blank plug (27) is that even if said electrical installation box assembly (100) is assembled in to the electrical installation box (51), the box can be docked to the other wall box (30), without any obstruction. Beam fixing elements (52) and stub assembly (53) are assembled with the electrical installation box (51) in such way which will not be knocked, which means said blank pug (27) fixing installation feature will not impact on box common guide ways (31, 32) of the electrical installation box (51) and thereby the process of installation is eased.

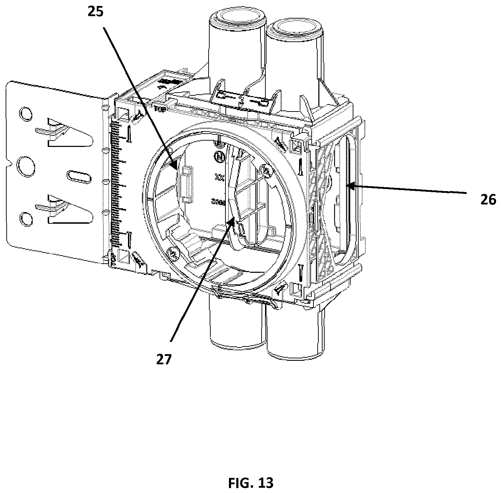

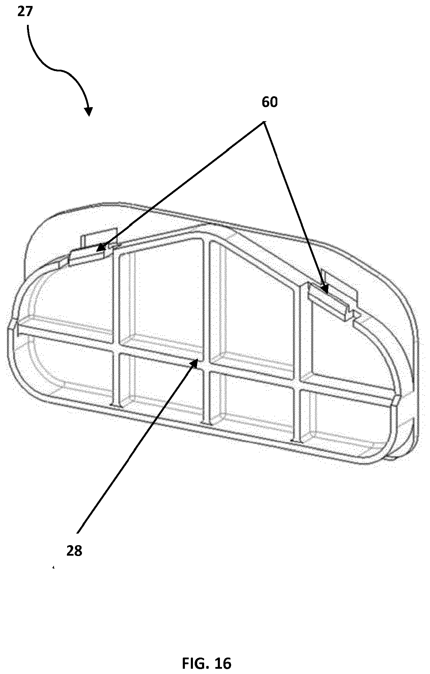

Electrical installation box assembly (100) can be installed without obstruction provided the docking feature (36) where common guide ways (31, 32) are in function even when blank plug (27) is assembled to the box assembly (100). Herein, a first common guide ways (31) is provided at the electrical installation box (51) to hold said beam fixing elements (52) and a second common guide ways (32) provides the guiding projections to dock two or more electrical installation boxes (51). Blank plug (27) can be assembled from inside of the box assembly or outside of the box assembly. If electrical installation box (51) is mounted without assembling said blank plug (27) initially, then concrete will fill inside the box assembly, therefore blank plug (27) is needed to be installed from inside. Said blank plug (27) is locked at the cable entry area (26) with locking projection (60) disposed at the periphery on said blank plug (27). This is illustrated in figures 13, 16, 18 and 19 of the accompanying drawings.

In some cases, installer needs to put said blank plug (27) inside the electrical installation box (51) and keep the hand in to the insert entry portion (25), so there is no visibility to installer because front end of the electrical installation box (51) is completely covered by boards which is fixed though out the wall. Said blank plug (27), herein, is provided with guiding projection (61) to assemble said blank plug (27) within said electrical installation box (51) for blind assembly i.e. without any vision at the installation position.

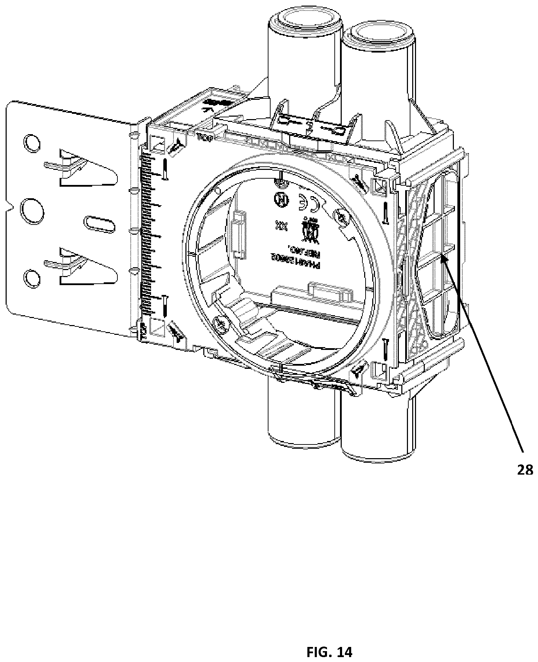

Referring to figure 14 of the accompanying drawings gripping means (28) are provided on said blank plug (27) for holding and strengthening the hold while installing said blank plug (27).

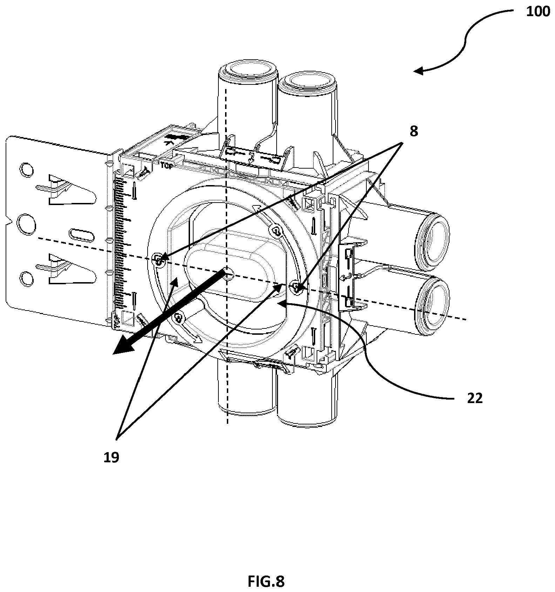

The rotary mechanism (11) of the lid-ring assembly (13) will now be explained with reference to figures 8, 9, 10 and 11 of the accompanying drawings.

As mentioned earlier, said lid (7) is assembled to the screw ring (17) by moving the screw ring (17) till the lid collar (63) is butt on the electrical installation box (51).

With reference to figure 8 of the accompanying drawings, both electrical installation box (51) and said screw ring (17) is provided with threaded (40, 49) and non-threaded area. If the screws positions (8) of ring lid assembly (13) are in horizontal (10) and vertical (9), the threaded area (49) of the screw ring (17) then will be engaged with the threaded area (40) of the electrical installation box (51) and telescopic deactivation (22) takes place.

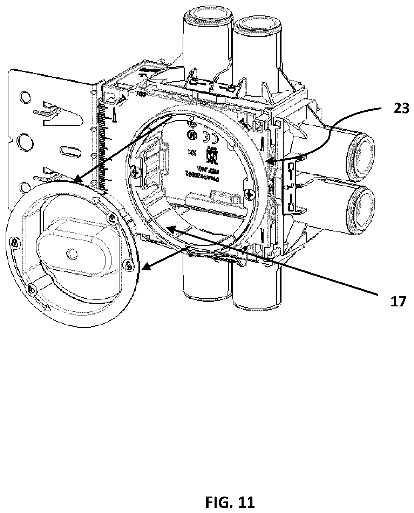

In this horizontal (10) (or vertical (9)) position of the screw heads (48) i.e. in telescopic deactivation condition (22), if the lid (7) is pulled, the threaded area (49) of screw ring (17) will be engaged with said thread of said electrical installation box (51) and only said lid (7) will come out which is depicted in figure 11. In this telescopic deactivation condition (22), the screw ring (17) remains fixed robust with the electrical installation box (51).

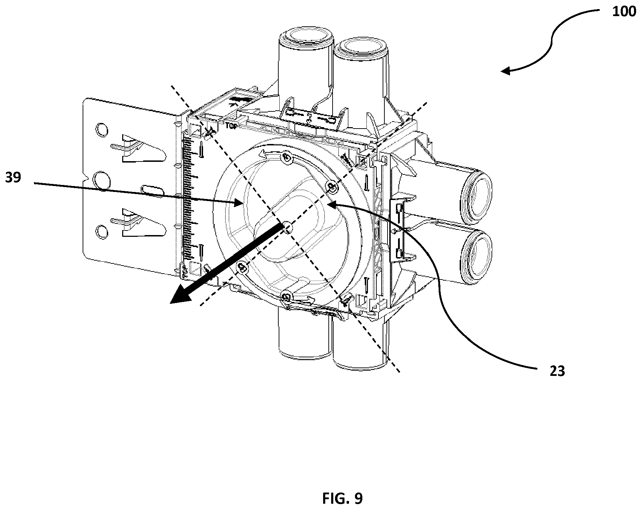

As shown in figure 9, if the ring lid assembly (13) is rotated by an angle, say 45° then the threaded area (49) of the screw ring (17) will travel to the non-threaded area of the electrical installation box (51) and thereby telescopic activation (23) is attained. In this condition said screw ring (17) is engaged with the lid (7) only. Upon pulling said lid (7), said screw ring (17) along with said lid (7) will come out as a lid-ring assembly (13) and thereby the position or height of said screw ring (17) is adjusted as per the need.

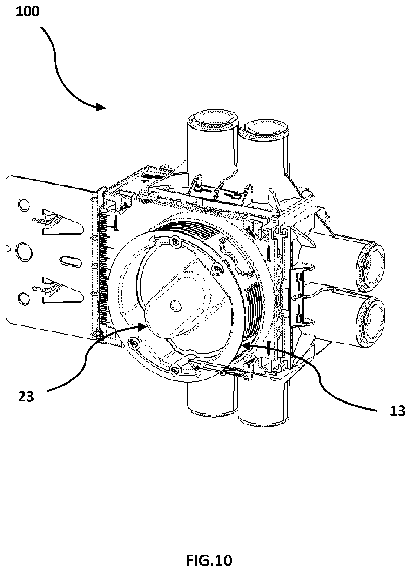

In said telescopic activation condition (23) the leveling of said screw ring (17) in accordance with the level of wall (3) is taken care of. As mentioned earlier, upon pulling, said lid-ring assembly (13) comes out and thereby the level of the screw ring (17) is adjusted as required which is illustrated in figure 10.

After adjusting the height of the screw ring (17), said lid-ring assembly is rotated again in order to engage the threaded areas (40, 49) of the screw ring (17) and the electrical installation box (51). Said screw ring (17) is turned back to the horizontal (10) position of screws where it is locked when mounting screws are tightened. In addition, if the level of said screw ring (17) comes out more than desired, it can simply be pushed back inside.

In an alternative configuration which is not part of the invention, the electrical installation box (51) has threaded and non-threaded area and the screw ring (17) is completely threaded or vice-versa. Therefore, said screw ring (17) is always engaged with the box (51) and screws are in horizontal position (10). Said threaded areas are one directional i.e. if we need to take the screw ring (17) out, the lid-ring assembly (13) is to be rotated, and to insert said screw ring (17), installer just needs to push the lid-ring assembly (13) inwards.

## Claims

1. An electrical installation box assembly (100) for installation of electrical wiring devices, said electrical installation box assembly (100) comprising:
- an electrical installation box (51) provided with a beam fixing element (52) for mounting inside a wall;
- a screw ring (17); and
- a lid (7), to be assembled with said screw ring (17) and thereafter mounted within said electrical installation box (51);
wherein,
- said electrical installation box (51) is provided with at least one threaded area (40) at its insert entry portion (25),
- said screw ring (17) is provided with at least one threaded area (49) on its outer periphery to removably engage with said threaded area (40) of said electrical installation box (51), and
- said lid (7) is provided with torsional support ribs (20) to removably engage with locking projections (57) provided in said screw ring (17) and adjust the position of said screw ring (17) in said electrical installation box (51), wherein said screw ring (17) and said electrical installation box (51) are provided with threaded and non-threaded areas, **characterized in that** the threaded areas of the screw ring (17) alternate with the non-threaded areas of the screw ring (17) along said outer periphery, and the threaded areas of the electrical installation box (51) alternate with the non-threaded areas of the electrical installation box (51) around said insert entry portion (25), such that when the ring lid assembly (13) is rotated, the threaded area (49) of the screw ring (17) can travel to the non-threaded area of the electrical installation box (51) whereby a telescopic activation (23) condition is attained, and **in that** said lid (7) is made out of transparent material for identifying said telescopic activation (23) condition and a deactivation (22) condition.

2. The electrical installation box assembly (100) as claimed in claim 1, wherein when said screw ring (17) is fixed with said electrical installation box (51), said threaded area (40) of said electrical installation box (51) and threaded area (49) of said screw ring (17) are engaged with each other and thereupon said electrical installation box (51) attains a telescopic deactivation condition (22).

3. The electrical installation box assembly (100) as claimed in any of the above claims 1 or 2, wherein the torsional support ribs (20) are flat supporting surfaces provided on the circular surface (56) of the lid (7) whereby these support ribs (20) help said lid (7) to removably engage with the locking projections (57) on the inner periphery of the screw ring (17) to rotate a lid-ring assembly (13) by transferring force to said screw ring (17) with frictional forces and supporting projections (19) on said circular surface (56).

4. The electrical installation box assembly (100) as claimed in any of the preceding claims 1 to 3, wherein said lid (7) is provided with a hand gripping projection (12) to operate said lid (7) by hand and thereby adjust the level of said screw ring (17) in said electrical installation box (51).

5. The electrical installation box assembly (100) as claimed in any of the preceding claims 1 to 4, wherein said lid (7) is provided with slots (16, 18) to operate said lid (7) by power tools or screw drivers.

6. The electrical installation box assembly (100) as claimed in any of the preceding claims 1 to 5, wherein said lid is provided with lid knock out (39) feature wherein a V-shaped cut is provided to the periphery of said lid (7) to draw power from said electrical installation box (51) without any crack on said lid (7).

7. The electrical installation box assembly (100) as claimed in any of the preceding claims 1 to 6, wherein said electrical installation box assembly (100) is provided with a box mounting magnet (45), fixed inside said lid (7) by means of a rubber layer (41); wherein said box mounting magnet (45) can be detected with a box identification magnet (42) and thereby electrical installation box (51) can be identified from outside the wall.

8. The electrical installation box assembly (100) as claimed in claim 7, wherein said lid (7) is provided with a U-shaped structural feature (47) at collar of said lid (7) to hold said box mounting magnet (45) robust and restrict any outer particle inside said electrical installation box (51).

9. The electrical installation box assembly (100) as claimed in any of the preceding claims 1 to 8, wherein said electrical installation box assembly (100) comprises at least one blank plug (27), to be installed by locking means (60) at cable entry area (27) of said electrical installation box (51) and thereupon provides protection from foreign particles at said cable entry area (27).

10. The electrical installation box assembly (100) as claimed in claim 9, wherein said blank plug (27) is provided with guiding projections (61) and gripping means (28) for installing said blank plugs (27) in said electrical installation box (51).

## Patentansprüche

1. Elektroinstallationskastenanordnung (100) zur Installation von elektrischen Verdrahtungsvorrichtungen, wobei die Elektroinstallationskastenanordnung (100) umfasst:
- einen Elektroinstallationskasten (51), der mit einem Trägerbefestigungselement (52) zum Montieren innerhalb einer Wand versehen ist;
- einen Schraubring (17); und
- einen Deckel (7), der mit dem Schraubring (17) zusammenzubauen und danach innerhalb des Elektroinstallationskastens (51) zu montieren ist;
wobei
- der Elektroinstallationskasten (51) mit mindestens einem Gewindebereich (40) an seinem Einsatzeintrittsabschnitt (25) versehen ist,
- der Schraubring (17) mit mindestens einem Gewindebereich (49) an seinem Außenumfang versehen ist, um lösbar in den Gewindebereich (40) des Elektroinstallationskastens (51) einzugreifen, und
- wobei der Deckel (7) mit Torsionsstützrippen (20) versehen ist, um lösbar in Verriegelungsvorsprünge (57) einzugreifen, die in dem Schraubring (17) bereitgestellt sind, und um die Position des Schraubrings (17) in dem Elektroinstallationskasten (51) einzustellen,
wobei der Schraubring (17) und der Elektroinstallationskasten (51) mit gewindetragenden und gewindefreien Bereichen versehen sind, **dadurch gekennzeichnet, dass**
die Gewindebereiche des Schraubrings (17) mit den gewindefreien Bereichen des Schraubrings (17) entlang des Außenumfangs abwechseln,
und die Gewindebereiche des Elektroinstallationskastens (51) sich mit den gewindefreien Bereichen des Elektroinstallationskastens (51) um den Einsatzeintrittsabschnitt (25) abwechseln,
sodass, wenn die Ringdeckelanordnung (13) gedreht wird, der Gewindebereich (49) des Schraubrings (17) zu dem gewindefreien Bereich des Elektroinstallationskastens (51) wandern kann, wodurch ein teleskopischer Aktivierungszustand (23) erreicht wird,
und dass der Deckel (7) aus transparentem Material hergestellt ist, um den teleskopischen Aktivierungszustand (23) und einen Deaktivierungszustand (22) zu identifizieren.

2. Elektroinstallationskastenanordnung (100) nach Anspruch 1, wobei, wenn der Schraubring (17) mit dem Elektroinstallationskasten (51) befestigt ist, der Gewindebereich (40) des Elektroinstallationskastens (51) und der Gewindebereich (49) des Schraubrings (17) miteinander in Eingriff stehen und daraufhin der Elektroinstallationskasten (51) einen teleskopischen Deaktivierungszustand (22) erreicht.

3. Elektroinstallationskastenanordnung (100) nach einem der vorstehenden Ansprüche 1 oder 2, wobei die Torsionsstützrippen (20) flache Stützflächen sind, die auf der kreisförmigen Oberfläche (56) des Deckels (7) bereitgestellt sind, wodurch diese Stützrippen (20) dem Deckel (7) helfen, lösbar mit den Verriegelungsvorsprüngen (57) auf dem Innenumfang des Schraubrings (17) in Eingriff zu stehen, um eine Deckel-Ring-Anordnung (13) durch Übertragen von Kraft auf den Schraubring (17) mit Reibungskräften und Stützvorsprüngen (19) auf der kreisförmigen Oberfläche (56) zu drehen.

4. Elektroinstallationskastenanordnung (100) nach einem der vorstehenden Ansprüche 1 bis 3, wobei der Deckel (7) mit einem Handgriffvorsprung (12) versehen ist, um den Deckel (7) von Hand zu betätigen und dadurch die Höhe des Schraubrings (17) in dem Elektroinstallationskasten (51) einzustellen.

5. Elektroinstallationskastenanordnung (100) nach einem der vorstehenden Ansprüche 1 bis 4, wobei der Deckel (7) mit Schlitzen (16, 18) versehen ist, um den Deckel (7) durch Elektrowerkzeuge oder Schraubendreher zu betätigen.

6. Elektroinstallationskastenanordnung (100) nach einem der vorstehenden Ansprüche 1 bis 5, wobei der Deckel mit einem Deckelausbrechungsmerkmal (39) versehen ist, wobei ein V-förmiger Schnitt an dem Umfang des Deckels (7) bereitgestellt ist, um Strom von dem Elektroinstallationskasten (51) ohne einen Riss an dem Deckel (7) zu ziehen.

7. Elektroinstallationskastenanordnung (100) nach einem der vorstehenden Ansprüche 1 bis 6, wobei die Elektroinstallationskastenanordnung (100) mit einem Kastenmontagemagneten (45) versehen ist, der innerhalb des Deckels (7) mittels einer Gummischicht (41) befestigt ist; wobei der Kastenmontagemagnet (45) mit einem Kastenidentifikationsmagneten (42) detektierbar ist und dadurch der Elektroinstallationskasten (51) von außerhalb der Wand identifizierbar ist.

8. Elektroinstallationskastenanordnung (100) nach Anspruch 7, wobei der Deckel (7) mit einem U-förmigen Strukturmerkmal (47) am Kragen des Deckels (7) versehen ist, um den Kastenmontagemagneten (45) robust zu halten und jegliche äußeren Partikel innerhalb des Elektroinstallationskastens (51) einzuschränken.

9. Elektroinstallationskastenanordnung (100) nach einem der vorstehenden Ansprüche 1 bis 8, wobei die Elektroinstallationskastenanordnung (100) mindestens einen Blindstecker (27) umfasst, der durch Verriegelungsmittel (60) an einem Kabeleintrittsbereich (27) des Elektroinstallationskastens (51) zu installieren ist und daraufhin einen Schutz vor Fremdpartikeln an dem Kabeleintrittsbereich (27) bereitstellt.

10. Elektroinstallationskastenanordnung (100) nach Anspruch 9, wobei der Blindstecker (27) mit Führungsvorsprüngen (61) und Greifmitteln (28) zum Installieren der Blindstecker (27) in dem Elektroinstallationskasten (51) versehen ist.

## Revendications

1. Ensemble boîtier d'installation électrique (100) pour installation de dispositifs de câblage électrique, ledit ensemble boîtier d'installation électrique (100) comprenant :
- un boîtier d'installation électrique (51) pourvu d'un élément de fixation de faisceau (52) pour montage à l'intérieur d'un mur ;
- une bague à vis (17) ; et
- un couvercle (7), à assembler avec ladite bague à vis (17) et monté par la suite au sein dudit boîtier d'installation électrique (51) ;
dans lequel,
- ledit boîtier d'installation électrique (51) est pourvu d'au moins une zone filetée (40) au niveau de sa partie d'entrée d'insertion (25),
- ladite bague à vis (17) est pourvue d'au moins une zone filetée (49) sur sa périphérie externe pour venir en prise de façon amovible avec ladite zone filetée (40) dudit boîtier d'installation électrique (51), et
- ledit couvercle (7) est pourvu de nervures de support de torsion (20) pour venir en prise de façon amovible avec des saillies de verrouillage (57) fournies dans ladite bague à vis (17) et ajuster la position de ladite bague à vis (17) dans ledit boîtier d'installation électrique (51),
dans lequel ladite bague à vis (17) et ledit boîtier d'installation électrique (51) sont pourvus de zones filetées et non filetées, **caractérisé en ce que**
les zones filetées de la bague à vis (17) alternent avec les zones non filetées de la bague à vis (17) le long de ladite périphérie externe,
et les zones filetées du boîtier d'installation électrique (51) alternent avec les zones non filetées du boîtier d'installation électrique (51) autour de ladite partie d'entrée d'insertion (25),
de telle sorte que lorsque l'on fait tourner l'ensemble couvercle de bague (13), la zone filetée (49) de la bague à vis (17) peut se déplacer vers la zone non filetée du boîtier d'installation électrique (51) moyennant quoi une condition d'activation télescopique (23) est atteinte,
et **en ce que** ledit couvercle (7) est fabriqué en matériau transparent pour identifier ladite condition d'activation télescopique (23) et une condition de désactivation (22).

2. Ensemble boîtier d'installation électrique (100) tel que revendiqué dans la revendication 1, dans lequel lorsque ladite bague à vis (17) est fixée avec ledit boîtier d'installation électrique (51), ladite zone filetée (40) dudit boîtier d'installation électrique (51) et la zone filetée (49) de ladite bague à vis (17) sont en prise l'une avec l'autre et dès lors ledit boîtier d'installation électrique (51) atteint une condition de désactivation télescopique (22).

3. Ensemble boîtier d'installation électrique (100) tel que revendiqué dans l'une quelconque des revendications 1 ou 2 ci-dessus, dans lequel les nervures de support de torsion (20) sont des surfaces de support plates fournies sur la surface circulaire (56) du couvercle (7) moyennant quoi ces nervures de support (20) aident ledit couvercle (7) à venir en prise de façon amovible avec les saillies de verrouillage (57) sur la périphérie interne de la bague à vis (17) pour faire tourner un ensemble couvercle-bague (13) par transfert de force à ladite bague à vis (17) avec des forces de frottement et des saillies de support (19) sur ladite surface circulaire (56).

4. Ensemble boîtier d'installation électrique (100) tel que revendiqué dans l'une quelconque des revendications 1 à 3 précédentes, dans lequel ledit couvercle (7) est pourvu d'une saillie de préhension manuelle (12) pour actionner ledit couvercle (7) à la main et ajuster de ce fait le niveau de ladite bague à vis (17) dans ledit boîtier d'installation électrique (51).

5. Ensemble boîtier d'installation électrique (100) tel que revendiqué dans l'une quelconque des revendications 1 à 4 précédentes, dans lequel ledit couvercle (7) est pourvu de fentes (16, 18) pour actionner ledit couvercle (7) à l'aide d'outils motorisés ou de tournevis.

6. Ensemble boîtier d'installation électrique (100) tel que revendiqué dans l'une quelconque des revendications 1 à 5 précédentes, dans lequel ledit couvercle est pourvu d'une caractéristique d'éjection de couvercle (39) dans lequel une découpe en forme de V est fournie sur la périphérie dudit couvercle (7) pour prélever de la puissance dudit boîtier d'installation électrique (51) sans aucune fissure sur ledit couvercle (7).

7. Ensemble boîtier d'installation électrique (100) tel que revendiqué dans l'une quelconque des revendications 1 à 6 précédentes, dans lequel ledit ensemble boîtier d'installation électrique (100) est pourvu d'un aimant de montage de boîtier (45), fixé à l'intérieur dudit couvercle (7) au moyen d'une couche de caoutchouc (41) ; dans lequel ledit aimant de montage de boîtier (45) peut être détecté avec un aimant d'identification de boîtier (42) et de ce fait un boîtier d'installation électrique (51) peut être identifié depuis l'extérieur du mur.

8. Ensemble boîtier d'installation électrique (100) tel que revendiqué dans la revendication 7, dans lequel ledit couvercle (7) est pourvu d'une caractéristique structurale en forme de U (47) au niveau d'un collier dudit couvercle (7) pour maintenir ledit aimant de montage de boîtier (45) solide et empêcher n'importe quelle particule externe à l'intérieur dudit boîtier d'installation électrique (51).

9. Ensemble boîtier d'installation électrique (100) tel que revendiqué dans l'une quelconque des revendications 1 à 8 précédentes, dans lequel ledit ensemble boîtier d'installation électrique (100) comprend au moins un bouchon d'obturation (27), à installer par un moyen de verrouillage (60) au niveau d'une zone d'entrée de câble (27) dudit boîtier d'installation électrique (51) et fournit dès lors une protection vis-à-vis de particules étrangères au niveau de ladite zone d'entrée de câble (27).

10. Ensemble boîtier d'installation électrique (100) tel que revendiqué dans la revendication 9, dans lequel ledit bouchon d'obturation (27) est pourvu de saillies de guidage (61) et d'un moyen de préhension (28) pour installation desdits bouchons d'obturation (27) dans ledit boîtier d'installation électrique (51).
